# EUROPÄISCHE PATENTSCHRIFT

(11) **EP 2 477 749 B1**
(45) Veröffentlichungstag und Bekanntmachung des Hinweises auf die Patenterteilung: **06.01.2016**
(21) Anmeldenummer: 10751914.2
(22) Anmeldetag: 01.09.2010
(51) Int. Cl.: B03C 3/013, B03C 3/12, B03C 3/38, B03C 3/51, F01N 3/01, F01N 3/023, F01N 3/05, F01N 3/10, B01D 46/24, B01D 46/00

(54) **VORRICHTUNG UND VERFAHREN ZUR BEHANDLUNG VON RUßPARTIKEL ENTHALTENDEM ABGAS**
DEVICE AND METHOD FOR TREATING EXHAUST GAS CONTAINING SOOT PARTICLES
DISPOSITIF ET PROCÉDÉ DE TRAITEMENT DE GAZ D'ÉCHAPPEMENT CONTENANT DES PARTICULES DE SUIE

(30) Priorität: 14.09.2009 DE 102009041090
(43) Veröffentlichungstag der Anmeldung: 25.07.2012
(73) Patentinhaber: Continental Automotive GmbH, 30165 Hannover (DE)
(72) Erfinder: MAUS, Wolfgang, 51429 Bergisch Gladbach (DE); HIRTH, Peter, 51503 Rösrath (DE); BRÜCK, Rolf, 51429 Bergisch Gladbach (DE)
(86) Internationale Anmeldenummer: PCT/EP2010/062805
(87) Internationale Veröffentlichungsnummer: WO 2011/029760

(56) Entgegenhaltungen:
- EP-A1- 1 125 704
- DE-A1- 10 026 696
- DE-A1-102005 034 033
- DE-U1- 20 122 703
- US-A- 5 766 318

## Beschreibung

Die vorliegende Erfindung betrifft eine Vorrichtung zur Behandlung von Rußpartikel enthaltendem Abgas, insbesondere mit einem so genannten elektrostatischen Filter bzw. Elektrofilter, sowie ein geeignetes Verfahren zur Umsetzung von Rußpartikeln eines Abgases. Die Erfindung findet insbesondere Anwendung bei der Behandlung von Abgasen mobiler Verbrennungskraftmaschinen im Kraftfahrzeugbereich, insbesondere bei der Behandlung von Abgasen resultierend aus Diesel-Kraftstoff.

Es sind bereits eine Vielzahl unterschiedlicher Konzepte zur Beseitigung von Rußpartikeln aus Abgasen mobiler Verbrennungskraftmaschinen diskutiert worden. Neben wechselseitig geschlossenen Wandstromfiltern, offenen Nebenstromfiltern, Schwerkraftabscheidern etc. sind auch bereits Systeme vorgeschlagen worden, bei denen die Partikel im Abgas elektrisch aufgeladen und dann mit Hilfe elektrostatischer Anziehungskräfte abgelagert werden. Diese Systeme sind insbesondere unter der Bezeichnung "elektrostatischer Filter" bzw. "Elektrofilter" bekannt.

So werden für solche Elektrofilter regelmäßig (mehrere) Sprühelektroden und Kollektorelektroden vorgeschlagen, die in der Abgasleitung positioniert werden. Dabei werden beispielsweise eine zentrale Sprühelektrode, welche etwa mittig durch die Abgasleitung verläuft, und eine umgebende Mantelfläche der Abgasleitung als Kollektorelektrode dazu genutzt, einen Kondensator auszubilden. Mit dieser Anordnung von Sprühelektrode und der Kollektorelektrode wird quer zur Strömungsrichtung des Abgases ein elektrisches Feld gebildet, wobei die Sprühelektrode beispielsweise mit einer Hochspannung betrieben werden kann, die im Bereich von ca. 15 kV liegt. Hierdurch können sich insbesondere Corona-Entladungen ausbilden, durch welche die mit dem Abgas durch das elektrische Feld strömenden Partikel unipolar aufgeladen werden. Aufgrund dieser Aufladung wandern die Partikel durch die elektrostatischen Coulomb-Kräfte zur Kollek-torelektrode.

Neben Systemen, bei denen die Abgasleitung als Kollektorelektrode ausgeführt ist, sind auch Systeme bekannt, bei denen die Kollektorelektrode beispielsweise als Drahtgitter ausgebildet ist. Dabei erfolgt die Anlagerung von Partikeln an dem Drahtgitter zu dem Zweck, die Partikel gegebenenfalls mit weiteren Partikeln zusammenzuführen, um so eine Agglomeration zu realisieren. Das das Gitter durchströmende Abgas reißt dann die größeren Partikel wieder mit und führt sie klassischen Filtersvstemen zu.

Auch wenn sich die oben beschriebenen Systeme bislang zumindest in Versuchen geeignet für die Behandlung von Rußpartikeln herausgestellt haben, stellt doch die Umsetzung dieses Konzeptes für den Serienbetrieb bei Kraftfahrzeugen eine große Herausforderung dar. Dies gilt insbesondere hinsichtlich der stark schwankenden, zeitweilig sehr hohen Rußbelastung im Abgas, sowie die gewünschte Nachrüstbarkeit eines solchen Systems für derzeit existierende Abgasanlagen. Zudem ist zu berücksichtigen, dass mit der gesteigerten Leistung solcher Abgasanlagen hinsichtlich der Beseitigung von Rußpartikeln auch die (periodische oder kontinuierliche) Regenerierung der Filtersysteme erforderlich ist, bei der der Ruß in gasförmige Bestandteile überführt wird.

Bei der Regeneration von Filtersystemen ist neben der intermittierenden Regeneration durch kurzzeitiges Aufheizen, das heißt Verbrennen des Rußes (katalytisch motivierte, oxidative Umsetzung), auch bekannt, Ruß mittels Stickstoffdioxid (NO₂) umzuwandeln. Der Vorteil der kontinuierlichen Regeneration mit Stickstoffdioxid ist, dass die Umwandlung von Ruß hier bereits bei deutlich tieferen Temperaturen (insbesondere kleiner 250 C) stattfinden kann. Aus diesem Grund ist die kontinuierliche Regeneration in vielen Anwendungsfällen bevorzugt. Das führt jedoch zu dem Problem, dass sichergestellt sein muss, dass das Stickstoffdioxid im Abgasstrom mit den abgelagerten Rußpartikeln in ausreichendem Umfang in Kontakt kommt.

Auch in diesem Zusammenhang ergeben sich technische Schwierigkeiten bei der Realisierung eines dauerhaften Betriebes solcher Abgasanlagen bei Kraftfahrzeugen, wobei die unterschiedlichen Belastungen der Verbrennungskraftmaschinen zu unterschiedlichen Abgasströmen, Abgaszusammensetzungen und Temperaturen führen.

DE 201 22 703 U1 offenbart eine Partikelfalle in Form eines lagenweise aufgebauten Wabenkörpers mit Strömungskanälen und Strukturen, die in einer Fluidströmung durch die Partikelfalle Verwirbelungs-, Beruhigungs- und/oder Totzonen erzeugen. Die Partikelfalle ist elektrisch leitfähig und kann elektrisch geerdet sein. Ferner ist ein Ionisierungselement zur Ionisierung der Partikel im Abgas vorgesehen.

US 5,766,318 beschreibt einen Filter zur Behandlung von (Atem-)Luft, bei dem Sammelelektroden aus Papier hergestellt sein können. Die Sammelelektroden können an der Abströmseite oder der Abströmseite mit einem elektrischen Isolator zur Verminderung von Konzentrationen des elektrischen Felds beschichtet sein.

Hiervon ausgehend ist es Aufgabe der vorliegenden Erfindung, die mit Bezug auf den Stand der Technik geschilderten Probleme zumindest teilweise zu lösen. Insbesondere soll eine Vorrichtung zur Behandlung von Rußpartikel enthaltendem Abgas angegeben werden, die gleichermaßen eine hohe Abscheidewirkung für Rußpartikel bereitstellt und gut regenerierbar ist. Auch soll ein entsprechendes Verfahren zur Umsetzung von Rußpartikeln eines Abgases angegeben werden. Die Vorrichtung sowie das Verfahren sollen sich leicht in bestehende mobile Abgassysteme integrieren und sich gleichermaßen kostengünstig herstellen lassen.

Diese Aufgaben werden gelöst mit einer Vorrichtung gemäß den Merkmalen des Patentanspruches 1 sowie einem Verfahren zur Umsetzung von Rußpartikeln eines Abgases gemäß den Schritten des Patentanspruches 10. Weitere vorteilhafte Ausgestaltungen der Erfindung sind in den jeweils abhängig formulierten Patentansprüchen angegeben. Es ist darauf hinzuweisen, dass die in den Patentansprüchen einzeln aufgeführten Merkmale in beliebiger, technologisch sinnvoller, Weise miteinander kombiniert werden können und weitere Ausgestaltungen der Erfindung aufzeigen. Die Beschreibung, insbesondere im Zusammenhang mit den Figuren, erläutert die Erfindung und gibt zusätzliche Ausführungsbeispiele an.

Die erfindungsgemäße Vorrichtung zur Behandlung von Rußpartikel enthaltendem Abgas mobiler Verbrennungskraftmaschinen umfasst zumindest:
- mindestens eine Stickstoffdioxid-Quelle oder eine Sauerstoff-Quelle,
- mindestens ein Ionisierungselement zur Ionisierung von Rußpartikeln,
- mindestens ein Neutralisierungselement zur Neutralisation von elektrisch geladenen Rußpartikeln,
- mindestens ein als Wabenkörper ausgebildeter Oberflächenabscheider, der eine Mehrzahl von Kanälen aufweist, die für das Abgas durchströmbar sind und sich zwischen einem Eintrittsbereich und einem Austrittsbereich erstrecken, wobei die Kanäle Kanalwände aufweisen, wobei zumindest teilweise an dem Eintrittsbereich mindestens ein Ablagerungshindernis für elektrisch geladene Rußpartikel vorgesehen ist.

Die Vorrichtung zeichnet sich dadurch aus, dass das Ablagerungshindernis durch eine in Verlaufsrichtung der Kanäle unterschiedliche elektrische Leitfähigkeit der Kanalwände gebildet ist, so dass eine überwiegende Ablagerung der elektrisch geladenen Rußpartikel im Eintrittsbereich verhindert wird und eine möglichst gleichmäßige Ablagerung von Rußpartikeln auf den Kanalwänden stattfindet.

Die hier vorgeschlagene Vorrichtung kann insbesondere Teil einer Abgasanlage eines Kraftfahrzeuges sein, welches einen Diesel-Motor aufweist. Die Vorrichtung kann aber auch als modularer Bausatz für eine Abgasanlage zur Verfügung gestellt werden.

Demgemäß ist zunächst eine Stickstoffdioxid-Quelle vorgesehen. Eine solche Stickstoffdioxid-Quelle ist beispielsweise ein katalytischer Konverter, der (zusammen mit anderen Bestandteilen des Abgases, insbesondere Sauerstoff) die Umwandlung von im Abgas enthaltenen Stickoxiden (insbesondere Stickstoffmonoxid NO) hin zu Stickstoffdioxid unterstützt. Grundsätzlich können auch mehrere solcher Stickstoffdioxid-Quellen vorhanden sein, dies ist aber nicht zwingend erforderlich. Üblicherweise kann die Stickstoffdioxid-Quelle mit einem katalytischen Konverter realisiert sein, der einen Wabenkörper mit einer Beschichtung aufweist, wobei die Beschichtung Platin, Rhodium, Palladium oder dergleichen aufweist. Die Stickstoffdioxid-Quelle ist folglich der Verbrennungskraftmaschine nachgeschaltet, befindet sich also zumindest teilweise im Abgassystem.

Während die Stickstoffdioxid-Quelle beispielsweise bevorzugt bei relativ "kalten Abgassystemen" zum Einsatz kommt (z. B. Dieselmotor-Anwendungen), kann auch eine oxidative Umsetzung der Rußpartikel mit Sauerstoff von einer Sauerstoff-Quelle bei höheren Temperaturen durchgeführt werden (z.B. Benzinmotor-Anwendungen). Als Sauerstoff-Quelle kommen bevorzugt beispielsweise der Verbrennungsmotor selbst oder eine so genannte Sekundärlufteinleitung, also insbesondere die Zufuhr eines sauerstoffhaltigen Gases in die Abgasleitung, in Betracht. Gegebenenfalls kann auch eine chemische Umsetzung mit einem Katalysator Sauerstoff erzeugen, so dass auch dies als Sauerstoff-Quelle angesehen werden kann.

Bevorzugt ist insbesondere eine Vorrichtung, die alternativ mindestens eine Stickstoffdioxid-Quelle oder mindestens eine Sauerstoff-Quelle stromaufwärts des Oberflächenabscheiders in der Abgasleitung aufweist.

Darüber hinaus ist mindestens ein Ionisierungselement zur Ionisierung von Rußpartikeln vorgesehen. Bevorzugt ist dabei, dass das Abgas zunächst die Stickstoffdioxid-Quelle erreicht, bevor dieses den Abschnitt der Vorrichtung mit dem mindestens einen Ionisierungselement erreicht. Das Ionisierungselement umfasst bevorzugt eine Ionisierungselektrode bzw. eine Mehrzahl von Ionisierungselektroden. Das mindestens eine Ionisierungselement ist mit einer Spannungsquelle verbunden, insbesondere mit einer Hochspannungsquelle. Die Spannung kann mittels einer Steuereinheit auch regelbar sein. Grundsätzlich kann eine Gleichstrom-Spannungsquelle oder eine Wechselstrom-Spannungsquelle bereitgestellt werden.

Darüber hinaus ist mindestens ein Neutralisierungselement zur Neutralisation von elektrisch geladenen Rußpartikeln vorgesehen. Das mindestens ein Neutralisierungselement erfüllt zumindest die Aufgabe, elektrische Ladung zu den elektrisch geladenen Rußpartikeln zuzuführen bzw. abzuführen (entsprechend der elektrischen Ladung), so dass bei Kontakt der elektrisch geladenen Rußpartikel eine elektrische Neutralisation bzw. eine Entionisierung der Rußpartikel stattfindet. Grundsätzlich muss die Anzahl von Ionisierungselementen und Neutralisierungselementen nicht übereinstimmen, dies kann aber zweckmäßig sein.

Zwischen dem mindestens einen Ionisierungselement und dem mindestens einen Neutralisierungselement ist regelmäßig ein elektrisches Feld gebildet. Dieses elektrische Feld erstreckt sich insbesondere in Richtung des Abgassystems bzw. in Strömungsrichtung des Abgases, wobei das Abgas zunächst das mindestens eine Ionisierungselement und später das mindestens eine Neutralisierungselement erreicht. Damit liegen das mindestens einen Ionisierungselement und das mindestens eine Neutralisierungselement in Strömungsrichtung des Abgases versetzt hintereinander, insbesondere mit einer Distanz von mehreren Zentimetern, wie beispielsweise mindestens 5 cm, mindestens 15 cm oder sogar mindestens 30 cm.

Des Weiteren ist mindestens ein Oberflächenabscheider vorgesehen. Der Oberflächenabscheider ist dadurch gekennzeichnet, dass er eine Vielzahl von Kanälen aufweist, die für das Abgas durchströmbar sind, und dadurch, dass sich in die Kanäle zwischen einem Eintrittsbereich und einem Austrittsbereich erstrecken. Grundsätzlich wäre es möglich, einen Oberflächenabscheider mit nur zwei Kanälen auszubilden, bevorzugt ist jedoch eine Ausgestaltung, bei der eine Vielzahl von Kanälen vorgesehen sind, beispielsweise mindestens 30, mindestens 50 oder sogar mindestens 100 Kanäle. Mit dem Begriff "Oberflächenabscheider" soll zum Ausdruck gebracht werden, dass eine (insbesondere auch im Verhältnis zu seinem Volumen) sehr große Oberfläche zur Anlagerung von Rußpartikeln bereitgestellt wird. Im Gegensatz zu bekannten Varianten, bei denen die Rußpartikel nach Möglichkeit aufeinander auf einem eng begrenzten Raum agglomeriert wurden, ist das Ziel hier, die Rußpartikel großflächig über die Oberflächen der durch die Kanäle gebildeten Kanalwände zu verteilen. Dabei soll jedoch nicht ausgeschlossen werden, dass sich die Rußpartikel beispielsweise auch im Inneren einer porösen Kanalwand ablagern. Als zur Ablagerung geeignete Oberflächen können hier also insbesondere die außen liegenden und innen liegenden Oberflächen der Kanalwände angesehen werden. Unter einem "Kanal" wird insbesondere ein abgegrenzter Strömungspfad verstanden, dessen Erstreckung deutlich länger als sein Durchmesser ist, wobei der Durchmesser insbesondere deutlich größer ist als die üblichen Größen der Rußpartikel. Auch wenn es für einige Zwecke ausreichend ist, separate und getrennte Kanäle auszubilden, können doch auch kommunizierende Kanäle bereitgestellt werden, bei denen ein Austausch von Teilabgasströmen (z.B. durch Öffnungen in den Kanalwänden hindurch) ermöglicht ist. Die Bereitstellung von Kanälen mit einer Erstreckung von beispielsweise mindestens 5 cm, bevorzugt aber sogar mindestens 10 cm, die insbesondere relativ klein im Querschnitt sind, erlaubt ohne Weiteres eine an das Strömungsprofil angepasste Auslegung der einzelnen Kanäle bzw. des Oberflächenabscheiders.

Damit aber gerade keine Anlagerung von Rußpartikeln in nur einer Ebene senkrecht zur Strömungsrichtung (wie bei einem Gitter) eintritt, ist zumindest teilweise an dem Eintrittsbereich mindestens ein Ablagerungshindernis für elektrisch geladene Rußpartikel vorgesehen. Dieses Ablagerungshindernis erfüllt die Funktion, eine (ausschließliche bzw. stark überwiegende) Ablagerung der elektrisch geladenen Rußpartikel im Eintrittsbereich zu verhindern. Dabei kann das Ablagerungshindernis so gestaltet sein, dass dieses nur für einen Teil der Kanäle bzw. für die Kanäle unterschiedlich ausgestaltet ist. Das Ablagerungshindernis kann einerseits den Oberflächenabscheider selbst betreffen, es ist aber auch möglich, dass das mindestens eine Ablagerungshindernis auf die Abgasströmung einwirkt und somit eine veränderte Strömungsführung des Abgases durch den Oberflächenabscheider bewirkt. Dazu kann das mindestens eine Ablagerungshindernis unmittelbar am Eintrittsbereich leicht versetzt und/oder ausgehend vom Eintrittsbereich hin in Richtung bis zum Austrittsbereich ausgebildet sein. Unter Umständen ist auch möglich, dass ein solches Ablagerungshindernis für zumindest einen Teil der Kanäle auch vom Eintrittsbereich bis zum Austrittsbereich vorgesehen ist. Die Anordnung bzw. Verteilung des mindestens einen Ablagerungshindernisses für elektrisch geladene Rußpartikel im Oberflächenabscheider ist so zu wählen, dass eine möglichst gleichmäßige Ablagerung von Rußpartikeln auf den Kanalwänden der Mehrzahl von Kanälen (und nicht nur an der Frontfläche) stattfindet. Dies führt insbesondere dazu, dass, auch bei einer kurzzeitig erhöhten Rußbeladung des Abgases, die abgelagerten Rußpartikel großflächig, das heißt mit einem relativ großen Abstand zueinander angeordnet sind. Dies eröffnet in besonderem Maße die Möglichkeit, die Rußpartikel dort kontinuierlich mit Stickstoffdioxid zu regenerieren. Dies wird dadurch begünstigt, dass das durch die Kanäle geführte Abgas über einen relativ langen Strömungsweg und mit kurzem Abstand hin zur Kanalwand die Möglichkeit hat, mit dort relativ frei liegenden, kleinen Partikeln eine Umsetzung zu bewirken. Dies hat zur Folge, dass insbesondere ein unerwünschter Druckabfall über den Oberflächenabscheidern bei zunehmender Beladung mit Rußpartikeln vermieden wird, da eine besonders effektive, kontinuierliche Regeneration des Oberflächenabscheiders durchgeführt wird.

Gemäß einer bevorzugten Ausführungsvariante der Erfindung ist das mindestens eine Neutralisierungselement im Bereich des Austrittsbereiches des mindestens einen Oberflächenabscheiders ausgebildet. Damit ist insbesondere gemeint, dass das mindestens eine Neutralisierungselement einen Teil des Austrittsbereiches bildet, wobei es beispielsweise Teil des Oberflächenabscheiders sein kann, mit diesem in (elektrischen) Kontakt stehend positioniert sein kann oder auch in Strömungsrichtung nachfolgend angeordnet sein kann. Das mindestens eine Neutralisierungselement kann demnach im Oberflächenabscheider integriert sein, aber auch eine separate nachgeordnete Ausgestaltung des mindestens einen Neutralisierungselementes ist möglich. Ist das mindestens eine Neutralisierungselement integraler Bestandteil des Oberflächenabscheiders, dann übernimmt der Oberflächenabscheider gleichzeitig die Funktion der Neutralisation, so dass schließlich elektrisch neutrale Rußpartikel an den Oberflächen des Oberflächenabscheiders lagern. Sollte das mindestens eine Neutralisierungselement dem Oberflächenabscheider nachfolgend ausgebildet sein, kann dieses nach Art einer herkömmlichen Kollektorelektrode ausgeführt sein, um das elektrische Feld durch den Oberflächenabscheider hindurch auszubilden. Die Kanäle sind dann insbesondere so ausgestaltet, dass die elektrisch geladenen Rußpartikel aufgrund der elektrischen Kräfte auf die Kanalwand auftreffen.

Es ist bevorzugt, dass das Ionisierungselement in Strömungsrichtung des Abgases vor dem Oberflächenabscheider angeordnet ist, so dass eine Ionisierung der Rußpartikel vor dem Oberflächenabscheider erfolgt. Besonders bevorzugt ist, wenn das Ionisierungselement mit einem Abstand von mindestens 5 cm, insbesondere von mindestens 10 cm, vor dem Oberflächenabscheider angeordnet ist. Damit dient der Oberflächenabscheider nicht zur Ionisierung sondern im Wesentlichen nur als Sammler für die bereits (stromaufwärts) ionisierten Rußpartikel.

Darüber hinaus ist der mindestens eine Oberflächenabscheider als Wabenkörper ausgebildet. Grundsätzlich kann der Wabenkörper mit unterschiedlichen Materialien aufgebaut sein, insbesondere auch mit metallischen und/oder keramischen Komponenten. Die Herstellungsverfahren für solche Wabenkörper sind seit vielen Jahren bekannt und die Wabenkörper haben sich hinsichtlich der Kontaktierung des Abgasstromes mit den Wandungen in den Kanälen als besonders geeignet herausgestellt. Der Wabenkörper kann dabei (nur) offene und/oder (teilweise) geschlossene Kanäle aufweisen. Grundsätzlich ist bevorzugt, dass die Kanäle sich im Wesentlichen gradlinig und parallel zueinander erstrecken (wie beispielsweise bei einem extrudierten Wabenkörper), dies ist aber nicht zwingend erforderlich. Auch können die Kanäle bzw. die Kanalwandungen mit Strukturierungen (Rillen, Noppen, Gleitflächen etc.) ausgeführt sein, um eine zusätzliche Verbesserung der Kontaktierung der aufgehaltenen Rußpartikel mit dem Stickstoffdioxid aus dem Abgas zu realisieren. Damit ragen die Strukturierungen ausgehend von der Kanalwand in die Kanäle und verengen insbesondere den Kanalquerschnitt. Die Kanalwände können dabei gasundurchlässig und/oder gasdurchlässig sein, wobei letzteres durch eine Porosität des Materials und/oder durch Öffnungen (z. B. Löcher) realisiert sein kann.

Insbesondere wird auch vorgeschlagen, dass den Kanälen verschiedene Ausgestaltungen des mindestens einen Ablagerungshindernisses zuordenbar sind. Das heißt mit anderen Worten insbesondere, dass das mindestens eine Ablagerungshindernis während des Betriebes zeitlich und/oder räumlich Einfluss auf unterschiedliche Ablagerungsbereiche der einzelnen Kanäle zur Folge hat. So können Ablagerungshindernisse im Bereich der zentral angeordneten Kanäle anders ausgeführt sein als die Ablagerungshindernisse in den Kanälen im Randbereich des Oberflächenabscheiders. Alternativ oder kumulativ ist möglich, die Ablagerungshindernisse nahe des Eintrittsbereiches für einige Kanäle anders auszuführen als im Bereich des Austrittsbereiches. Ist der Oberflächenabscheider selbst ein Neutralisierungselement, kann so insbesondere in Verlaufsrichtung der Kanäle bzw. in Abhängigkeit der Position der Kanäle eine unterschiedliche elektrische Leitfähigkeit der Kanalwand realisiert werden, wodurch die Ausprägung des elektrischen Feldes und damit die Wirkung der Coulombschen Kräfte auf die elektrisch geladenen Rußpartikel angepasst ist.

Einer Weiterbildung der Vorrichtung zur Folge ist auch vorgesehen, dass das mindestens eine Ablagerungshindernis sich in verschiedene axiale Zonen der Kanäle erstreckt. Folglich kann ein Ablagerungshindernis bei einem Teil der Kanäle vom Eintrittsbereich bis wenige Millimeter hinein in einen Kanal ausgeführt sein, es ist aber auch möglich, dass das Ablagerungshindernis sich hin bis zum Austrittsbereich erstreckt. Dabei können auch mehrere (gleichartige und/oder unterschiedliche) Ablagerungshindernisse in den jeweiligen Kanälen vorgesehen sein.

Zuzätzlich zuden erfindungsgemäßen Merkmalen kann vorgesehen sein, dass das mindestens eine Ablagerungshindernis durch verschiedene Kanalformen gebildet ist. Bei dieser konkreten Ausgestaltung des Oberflächenabscheiders, insbesondere wenn dieser ein Neutralisierungselement darstellt, soll ermöglichen, dass die Auftreffwahrscheinlichkeit und/oder die Ablagerungsfähigkeit und/oder die Strömungspfade für Rußpartikel an das Strömungsprofil des Abgases und/oder den Abgasvolumenstrom angepasst ist. Damit soll insbesondere entgegengewirkt werden, dass die Kanäle unterschiedlich stark mit Partikel beströmt werden. Vielmehr kann so realisiert werden, dass die Kanäle bei unterschiedlichen Abgasströmungen verschieden (und im Mittel damit gleichmäßig) beströmt werden. Unter der "Kanalform" wird sowohl deren Querschnitt als auch die Verlaufsform des Kanals betrachtet. Unterschiedliche Kanalformen sind insbesondere dann gegeben, wenn sich die Kanäle in einer der folgenden Eigenschaften unterscheiden: Größe (Durchmesser) des Kanalquerschnittes, Form des Kanalquerschnittes, Neigung des Kanalverlaufs, Krümmung des Kanalverlaufs, Aufweitung des Kanalverlaufs, Einengung des Kanalverlaufs, Position und/oder Art der Strukturierungen der Kanalwände, etc.

Darüber hinaus wird gerade bei dieser Variante vorgesehen, dass zentral angeströmte Kanäle zumindest größer oder strukturierter ausgeführt sind als dezentral angeströmte Kanäle. Das heißt mit anderen Worten auch, dass im zentralen Bereich bzw. dem zentral angeströmten Bereich des Oberflächenabscheiders größere Kanalquerschnitte bzw. eine kleinere Kanaldichte vorgesehen ist als in dem dezentralen bzw. randnahen Bereich des Oberflächenabscheiders. Alternativ oder kumulativ dazu können die Kanalwände der zentral angeströmten Kanäle in einem größeren Maße mit Strukturen ausgeführt sein, also hinsichtlich der Größe der Strukturen, der Häufigkeit der Strukturen etc. Diese Maßnahme berücksichtigt insbesondere die Tatsache, dass der Druckverlust des Abgases beim Durchströmen des Oberflächenabscheiders mit dem Abgasmassenstrom quadratisch ansteigt. Die Bereitstellung von Strukturen im zentralen Bereich führt nun dazu, dass auch für diesen Teil überproportional große Teile der Abgasströmung in die Randbereiche geleitet werden, so dass insgesamt in etwa die gleiche Strömung in den Kanälen festzustellen ist.

Gemäß der Erfindung kann das mindestens eine Ablagerungshindernis durch wenigstens einen elektrischen Isolator gebildet sein. Hierfür kommen insbesondere keramische Beschichtungen in Betracht, die z. B. auch auf metallischen Oberflächen aufgebracht werden können. Alternativ können auch separate Bauteile, die einen elektrischen Isolator bilden zugefügt werden.

Grundsätzlich ist aber auch möglich, dass der mindestens eine Oberflächenabscheider als Grundwerkstoff einen elektrischen Isolator aufweist, der ein Ablagerungshindernis bildet. Das heißt mit anderen Worten, dass der Oberflächenabscheider selbst zumindest teilweise keine elektrische Leitfähigkeit aufweist. Dann ist insbesondere unter Berücksichtigung der Kanalform (z.B. gewundene und/oder strukturierte Kanäle) bzw. des Konzeptes des Oberflächenabscheiders (z.B. Wandstromfilter mit wechselseitig geschlossenen Kanälen) sicherzustellen, dass sich die Partikel an bzw. in diesem Grundwerkstoff anlagern können.

Um auch hier die gezielte Ablagerung von Partikeln über die gesamte Oberfläche des Oberflächenabscheiders gleichmäßig zu erreichen, kann eine elektrische Leitfähigkeit integriert sein, z. B. in der Weise, dass der Oberflächenabscheider mindestens ein Neutralisierungselement aufweist, wobei das mindestens eine Neutralisierungselement in den Kanälen verschieden ausgeführt ist. Folglich können elektrisch leitfähige Materialien in bzw. auf dem Grundwerkstoff des Oberflächenabscheiders angeordnet sein, die mit einer elektrischen Masse verbunden sind. Diese kann durch entsprechende elektrisch leitfähige (ggf. miteinander in Kontakt stehende) Leiter, Fasern, Partikel und dergleichen erreicht werden. Hierfür bieten sich insbesondere metallische Einlagerungen an.

Der Oberflächenabscheider weist bevorzugt poröse Kanalwände auf, die insbesondere mit Sintermetall, Keramik, Siliziumcarbid (SiC) oder Mischungen daraus gebildet sind. Ganz besonders bevorzugt handelt es sich um einen (zumindest teilweise) extrudierten Wabenkörper.

Gemäß einem weiteren Aspekt der vorliegenden Erfindung wird ein Verfahren zum Betreiben einer erfindungsgemäßen Vorrichtung zur Umsetzung von Rußpartikeln eines Abgases vorgeschlagen, welches zumindest die folgenden Schritte umfasst:
a) Bereitstellen von zumindest Stickstoffdioxid oder Sauerstoff im Abgas,
b) Ionisieren von Rußpartikeln mittels eines elektrischen Feldes,
c) Ablagern von elektrisch geladenen Rußpartikeln auf inneren Kanalwänden mindestens eines Oberflächenabscheiders,
d) Inkontaktbringen von Stickstoffdioxid mit den abgelagerten Rußpartikeln auf inneren Kanalwänden des mindestens einen Oberflächenabscheiders.

Damit wird insbesondere auch eine kontinuierliche Regeneration von Rußpartikel bei der erfindungsgemäß vorgeschlagenen Vorrichtung angegeben. Auch aus diesem Grund ist darauf hinzuweisen, dass die mit Bezug auf die Vorrichtung dargestellten Merkmale zur Erläuterung des Verfahrens herangezogen werden können und umgekehrt. Es ist auch festzuhalten, dass die Schritte a) und b) nacheinander und/oder gleichzeitig durchgeführt werden können, wobei auf die jeweilige Einwirkung auf einen Teilabgasstrom abgestellt wird. Bevorzugt ist, dass alle Schritte a) bis d) während des Betriebes einer mobilen Verbrennungskraftmaschine permanent durchgeführt werden. Außerdem ist bevorzugt, dass Schritt a) alternativ die abgasleitungsinterne Bereitstellung / Erzeugung von Stickstoffdioxid oder Sauerstoff umfasst.

Gemäß einer Weiterbildung des Verfahrens wird auch vorgeschlagen, dass in Abhängigkeit von einem Abgasparameter das Strömungsverhalten des Abgases durch die Kanäle des mindestens einen Oberflächenabscheiders oder die Ausgestaltung des elektrischen Feldes variiert wird. Gegebenenfalls ist es auch möglich, beide Maßnahmen gleichzeitig bzw. nebeneinander durchzuführen. Die Änderung des Strömungsverhaltens kann selbständig erfolgen, beispielsweise durch eine entsprechende Ausgestaltung des Oberflächenabscheiders, so dass bei unterschiedlichem Strömungsverhalten unterschiedliche Kanäle durchströmt werden. Es ist jedoch auch möglich, eine aktive Variation vorzunehmen, indem beispielsweise die Frequenz und/oder Feldstärke des elektrischen Feldes geregelt werden. Als Abgasparameter kommen insbesondere die Temperatur, der Massenstrom, der Volumenstrom und/oder die Strömungsgeschwindigkeit des Abgases in Betracht. Selbstverständlich können auch andere Kennwerte des Betriebes der Verbrennungskraftmaschine alternativ dazu oder kumulativ eingesetzt werden, um Rückschlüsse auf einen entsprechenden Abgasparameter zu ziehen.

Das Verfahren dient bevorzugt dazu, eine kontinuierliche Regeneration des mindestens einen Oberflächenabscheiders vorzunehmen. Hierzu wird der Ruß mit Stickstoffdioxid, welches stromaufwärts im Abgasstrom erzeugt wurde, in Kontakt gebracht und chemisch umgesetzt. Zur weiteren Erläuterung kann auf das sogenannte CRT-Verfahren (CRT = *continuous regeneration trap,* vergleiche z.B. EP-A-0341832) zurückgegriffen werden.

Darüber hinaus wird auch ein Verfahren bevorzugt, bei dem eine gleichmäßige Ablagerung der elektrisch geladenen Rußpartikel auf allen Kanälen des mindestens einen Oberflächenabscheiders erfolgt. Damit ist insbesondere gemeint, dass die Vorrichtung bzw. der Oberflächenabscheider so gestaltet ist, dass die Wahrscheinlichkeit für eine Ablagerung der elektrisch geladenen Rußpartikel auf allen inneren Kanalflächen des Oberflächenabscheiders im Wesentlichen gleich ist. Die ggf. zu ergreifenden Maßnahmen hierzu wurden bereits oben dargestellt.

Die Erfindung findet bevorzugt Anwendung bei einem Kraftfahrzeug mit einer Verbrennungskraftmaschine, insbesondere einem Dieselmotor mit einem nachgeordneten Abgassystem, welches eine erfindungsgemäße Vorrichtung aufweist. Dazu weist das Kraftfahrzeug beispielsweise eine Steuereinheit auf, um diese Vorrichtung mit dem erfindungsgemäßen Verfahren zu betreiben, wobei die Steuereinheit insbesondere durch entsprechende Software eingerichtet ist, den erfindungsgemäßen Betrieb während des Betriebes des Kraftfahrzeuges zu realisieren. Gegebenenfalls kann die Steuereinheit mit Sensoren des Abgassystems und/oder der Verbrennungskraftmaschine und/oder gespeicherten Datenmodellen zusammenwirken, um eine Anpassung dieses Systems vorzunehmen.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung aufzeigen, diese jedoch nicht darauf beschränkt ist. Es zeigen schematisch:
- Fig. 1:: eine erste Ausführungsvariante einer erfindungsgemäßen Vorrichtung,
- Fig. 2:: ein erstes Detail einer ersten Ausführungsvariante eines Oberflächenabscheiders,
- Fig. 3:: ein zweites Detail einer zweiten Variante eines Oberflächenabscheiders,
- Fig. 4:: ein Detail einer Abwandlung eines Oberflächenabscheiders (nicht erfindungsgemäß),
- Fig. 5:: eine weitere Ausführungsvariante der Vorrichtung,
- Fig. 6:: eine Illustration des erfindungsgemäßen Verfahrens,
- Fig. 7:: eine Veranschaulichung der Anziehungskräfte auf ein Rußpartikel, und
- Fig. 8:: ein Detail einer weiteren Ausführungsvariante eines Oberflächenabscheiders.

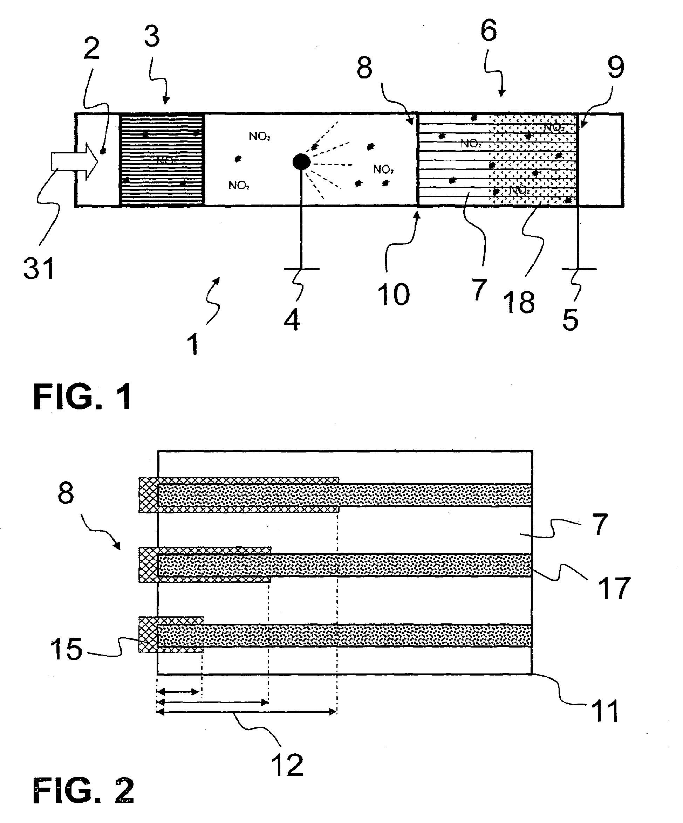

Fig. 1 zeigt ein erstes Ausführungsbeispiel für eine erfindungsgemäße Vorrichtung 1. Dabei strömt Abgas mit einer Strömungsrichtung 31 durch ein Abgassystem, das hier in etwa rohrförmig dargestellt ist, worauf es darauf nicht ankommt. Im Abgas sind Rußpartikel 2 enthalten. Das Abgas mit den Rußpartikeln 2 wird zunächst durch eine Stickstoffdioxid-Quelle 3 hindurchgeführt, insbesondere durch einen wabenförmigen katalytischen Konverter mit Platinbeschichtung. Diese Stickstoffdioxid-Quelle wandelt im Abgas befindliche Stickstoffmonoxide (NO) in Stickstoffdioxide (NO₂) um, so dass der Anteil an Stickstoffdioxiden im Abgas erhöht wird (insbesondere mindestens 25 Gew.-% oder sogar mindestens 50 Gew.-% der gesamten Stickoxide ausmachend). Das so aufbereitete Abgas strömt weiter hin zu einem (einzelnen) Oberflächenabscheider 6. Der Oberflächenabscheider 6 weist einen Eintrittsbereich 8 und einen Austrittsbereich 9 auf. Zwischen dem Eintrittsbereich 8 und dem Austrittsbereich 9 erstrecken sich gradlinige, parallel zueinander verlaufende Kanäle 7. Die Kanäle 7 sind hier (teilweise) mit einer katalytischen Beschichtung 18 ausgeführt, dies ist aber nicht zwingend erforderlich.

Bevor das Abgas den Oberflächenabscheider 6 erreicht, tritt es in ein elektrisches Feld ein, welches mittels eines Ionisierungselementes 4 stromaufwärts des Oberflächenabscheiders 6 und dem Neutralisierungselement am Austrittsbereich 9 des Oberflächenabscheiders 6 ausgebildet ist. In dem dargestellten Fall ist das Neutralisierungselement 5 in die Kanalwände des Oberflächenabscheiders 6 integriert. Um nunmehr zu verhindern, dass die elektrisch aufgeladenen Rußpartikel direkt auf die Frontfläche des Wabenkörpers im Bereich des Eintrittsbereiches 8 auftreffen und somit die Kanäle 7 selbst nicht zur Anlagerung von Rußpartikeln mehr dienen, ist im Bereich des Eintrittsbereiches 8 ein Ablagerungshindernis 10 ausgebildet, welches gerade eine dortige Anlagerung reduziert bzw. verhindert. Unterschiedliche Ausgestaltungen dieses Ablagerungshindernisses 10 werden auch mit Bezug auf die nachfolgenden Figuren dargestellt.

So zeigt Fig. 2 zum Beispiel ein Detail eines Oberflächenabscheiders mit einer Mehrzahl von Kanälen 7, die durch Kanalwände 17 begrenzt sind. Damit ist insbesondere ein so genannter Wabenkörper 11 gebildet. Um nunmehr zu verhindern, dass die Rußpartikel sich nur im Eintrittsbereich 8 des Wabenkörpers 11 anlagern, ist dort als Ablagerungshindernis ein (auf den Kanalwänden nach Art einer Beschichtung ausgeführter) elektrischer Isolator 15 vorgesehen. In dieser Figur ist auch angedeutet, dass die Ausprägung des Ablagerungshindernisses oder, wie hier gezeigt, des elektrischen Isolators unterschiedliche Zonen 12 der Kanäle 7 betreffen können. So können sich die Zonen 12 insbesondere hinsichtlich ihrer Erstreckung und/oder Position voneinander unterscheiden.

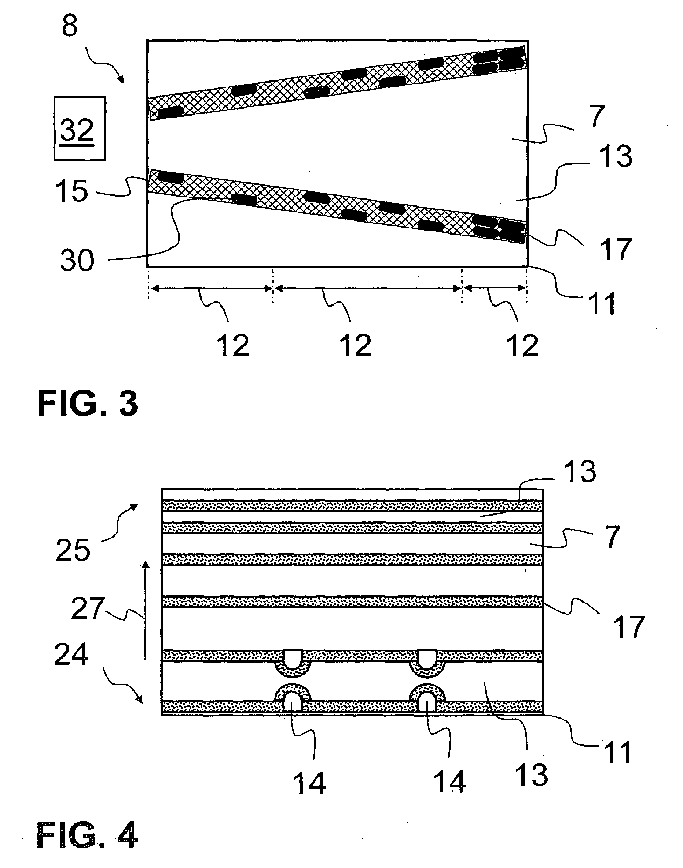

Fig. 3 zeigt eine Ausführungsvariante eines Wabenkörpers 11, der mit konisch bzw. sich verjüngenden/erweiternden Kanälen ausgeführt ist.

Während die Kanalform in Fig. 2 beispielsweise im Wesentlichen rund und über die Länge gleichbleibend ist, verändert sich der Querschnitt bei der konischen Kanalform in deren Längsrichtung. Infolge der veränderten Kanalquerschnitte kann auch hier die Strömung beeinflusst werden bzw. eine Ablagerung von Rußpartikeln auch im hinteren Teil des Wabenkörpers 11 erreicht werden. Stromwärts dieses Wabenkörpers 11 ist rein schematisch auch eine Sauerstoff-Quelle 32 angedeutet, die in ein Abgassystem integriert werden kann - z.B. an der Stelle der Stickstoffdioxid-Quelle.

Darüber hinaus ist hier eine Ausgestaltung des Wabenkörpers 11 gezeigt, bei dem die Kanalwände 17 mit einem Grundwerkstoff ausgeführt sind, der als elektrischer Isolator 15 wirkt, z.B. Keramik oder Siliziumcarbid. Um nun aber gleichwohl eine Bewegung der Rußpartikel aufgrund von Coulombschen Kräften hin zu den Kanalwänden 17 zu motivieren, weisen die Kanalwände 17 (die gegebenenfalls auch porös sein können) elektrische Leiter 30 auf, beispielsweise nach Art einer Armierung, eingelagerten Fasern etc.. Damit wird die Anziehungskraft von der Kanalwand 17 auf die Rußpartikel über die Länge der Kanäle 7 stärker bzw. ist diese Anziehungskraft im Eintrittsbereich 8 geringer. Diese axial gestaffelte Leitfähigkeit kann dabei zonenweise erfolgen, so dass über vorgegebene Zonen 12 jeweils in etwa eine gleiche Leitfähigkeit gegeben ist, der Übergang kann jedoch auch kontinuierlich bzw. stetig sein.

Fig. 4 veranschaulicht ein Detail eines Wabenkörpers 11 als Oberflächenabscheider, wobei die Kanäle 7 unterschiedliche Kanalformen 13 aufweisen. In einem Zentrum 24, also in einem zentral angeströmten Bereich des Oberflächenabscheiders 6, ist der Kanalquerschnitt 7 relativ groß. Betrachtet man die Kanalform 13 in Richtung des Radius 27, so ist festzuhalten, dass im Bereich des Randes 25, also einem dezentral angeströmten Bereich, der Querschnitt der Kanäle kleiner ist. Zudem ist festzuhalten, dass (nur) die Kanäle 7 im Bereich des Zentrums 24 Strukturierungen 14 aufweisen, die, insbesondere mit steigender Strömungsgeschwindigkeit des Abgases bzw. mit größerem Abgasvolumenstrom, einen größeren Druckabfall aufbauen, so dass das Abgas verstärkt auch in radial außen liegenden Kanälen eingeleitet wird. Diese Maßnahmen helfen insbesondere dabei, eine gleichmäßige Beladung mit Rußpartikeln und ein gleichmäßige Bereitstellung von Stickstoffdioxid für die abgelagerten Rußpartikel zu bewirken.

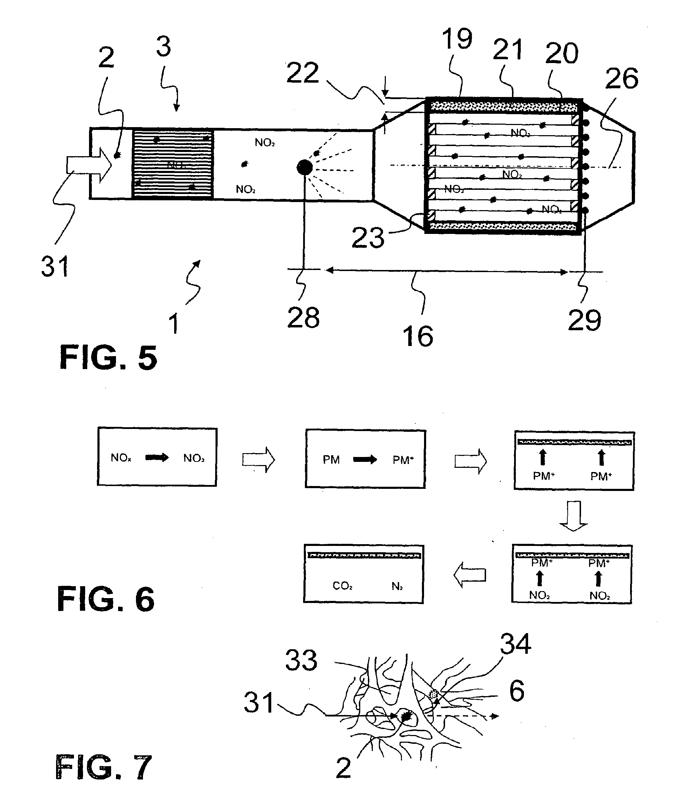

Fig. 5 zeigt ein weiteres Ausführungsbeispiel der erfindungsgemäßen Vorrichtung 1. Im linken Teilbereich ist wieder dargestellt, wie das Rußpartikel 2 enthaltende Abgas in Strömungsrichtung 31 durch die Stickstoffdioxid-Quelle 3 hindurchströmt, so dass vermehrt Stickstoffdioxid gebildet ist. Wiederum ist nachfolgend ein elektrisches Feld 16 ausgebildet, diesmal mittels einer als Ionisierungselement 4 dienenden Ionisierungselektrode 18 und einer, dem Oberflächenabscheider 6 nachgeordneten, als Neutralisierungselement dienenden Masseelektrode 29. Folglich befindet sich der Oberflächenabscheider vollständig im elektrischen Feld 16.

Bei dem hier dargestellten Oberflächenabscheider 6 handelt es sich insbesondere um einen klassischen Wandstromfilter aus Keramik bzw. Siliziumcarbid, dessen Kanäle wechselseitig verschlossen sind, so dass jeweils Strömungssackgassen gebildet sind. Die Kanäle 7 müssen sich dabei aber nicht, wie hier dargestellt, parallel zur zentralen Achse 26 des Wabenkörpers erstrecken. Die für den Verschluss vorgesehenen wechselseitig positionierten Stopfen 23 können ein entsprechendes Ablagerungshindernis für elektrisch geladene Rußpartikel darstellen bzw. als solche ausgebildet sein. Die Kanalwände sind dabei porös bzw. gasdurchlässig ausgebildet, so dass die Rußpartikel herausgefiltert werden. Ist bei einem solchen Oberflächenabscheider 6 eine elektrische Leitfähigkeit vorhanden, beispielsweise durch einen direkten Kontakt der Masseelektrode 29 und einer entsprechenden Ausgestaltung des Wabenkörpers, sollte auch eine entsprechend gezielte Ableitung der elektrischen Ladung erfolgen. Zu diesem Zweck wird vorgeschlagen, dass der Wabenkörper von einer Matte 21 umgeben ist, die einen ausreichenden Abstand 22 zum Gehäuse 19 realisiert, um einen Spannungsüberschlag vom Oberflächenabscheider 6 hin zum Gehäuse 19 zu vermeiden. Ist der Wabenkörper metallisch und hat einen eigenen Mantel 20, gilt entsprechendes.

Fig. 6 soll noch einmal bildlich einzelne Verfahrensschritte veranschaulichen. Hier werden in einem ersten Schritt Stickoxide (NOₓ) bzw. Stickstoffmonoxid (NO) mittels der Stickstoffdioxid-Quelle (bzw. einer entsprechenden katalytischen Beschichtung) zu Stickstoffdioxid (NO₂) umgewandelt. Außerdem erfolgt eine Ionisierung der Rußpartikel (PM) bzw. eines Teiles der Rußpartikel, so dass diese eine elektrische Ladung aufweisen. Die elektrisch geladenen Rußpartikel (PM⁺) werden dann gleichmäßig an eine Kanalwand unter Zuhilfenahme entsprechender elektrostatischer Anziehungskräfte abgelagert, wobei dies nach Möglichkeit sehr gleichmäßig erfolgt. Die weiter beabstandeten, gegebenenfalls noch elektrisch geladenen oder sogar schon neutralisierten Rußpartikel (PM⁺/PM) sind frei zugänglich für das erzeugte Stickstoffdioxid (NO₂), so dass eine einfache und effektive Regenerierung der Ablagerungsfläche bzw. des Filtermaterials ermöglicht wird. Für diesen Umsetzungsvorgang können auch Katalysatoren unterstützend eingesetzt werden. Nach der Umsetzung der Rußpartikel werden die gasförmigen Restbestandteile aus dem Oberflächenabscheider entfernt, wie beispielsweise Kohlendioxid (CO₂) und elementaren Stickstoff (N₂).

Fig. 7 veranschaulicht nun noch beispielhaft und illustrativ die Wirkung des Oberflächenabscheiders 6 auf das Rußpartikel 2. Dieses fliegt demnach z.B. in der Strömungsrichtung 31 durch die Poren 33 des Oberflächenabscheiders 6, wobei es elektrisch geladen ist. Aufgrund des Potentials hin zum Oberflächenabscheider 6 fliegt dieses Rußpartikel 2 nicht geradlinig weiter (wie gestrichelt angedeutet), sondern erfährt eine Ablenkung 34 und kommt an dem Oberflächenabscheider 6 zur Anlage. Dort kann nun eine entsprechende Umsetzung des Rußpartikels 2 erfolgen.

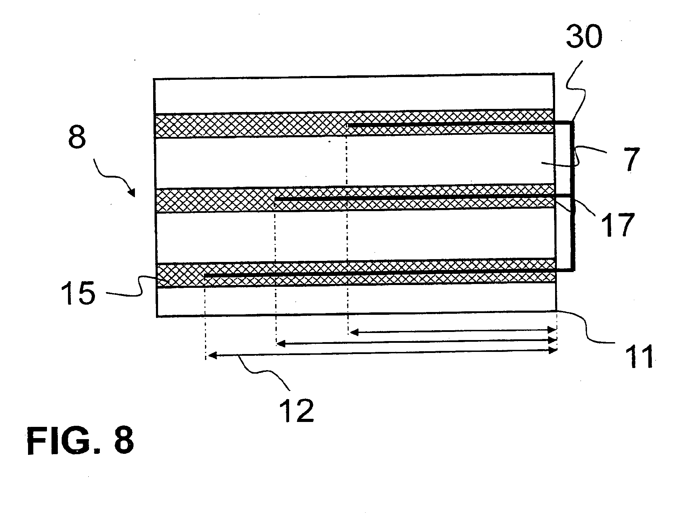

Fig. 8 zeigt ein Detail einer weiteren Ausführungsvariante eines erfindungsgemäßen Oberflächenabscheiders mit einer Mehrzahl von Kanälen 7, die durch Kanalwände 17 begrenzt sind. Damit ist insbesondere ein so genannter Wabenkörper 11 gebildet. Der Wabenkörper 11 ist aus einem isolierenden Material, vorzugsweise Keramik, gebildet. Um nunmehr eine bevorzugte Ablagerung von Rußpartikeln auch hinter dem Eintrittsbereich 8 des Wabenkörpers 11 im Wabenkörper 11 zu erreichen sind in dem als elektrischer Isolator 15 ausgeführten Wabenkörper elektrische Leiter 15 vorgesehen, die in unterschiedlichen Zonen 12 des Wabenkörpers sich unterschiedlich weit in Richtung hin zum Eintrittsbereich 8 erstrecken.

Mit der Erfindung werden insbesondere eine gleichmäßige Ablagerung der Rußpartikel und eine kontinuierliche Regeneration des Oberflächenabscheiders erreicht.

### Bezugszeichenliste

- 1: Vorrichtung
- 2: Rußpartikel
- 3: Stickstoffdioxid-Quelle
- 4: Ionisierungselement
- 5: Neutralisierungselement
- 6: Oberflächenabscheider
- 7: Kanal
- 8: Eintrittsbereich
- 9: Austrittsbereich
- 10: Ablagerungshindernis
- 11: Wabenkörper
- 12: axiale Zone
- 13: Kanalform
- 14: Strukturierung
- 15: elektrischer Isolator
- 16: elektrisches Feld
- 17: Kanalwand
- 18: katalytische Beschichtung
- 19: Gehäuse
- 20: Mantel
- 21: Matte
- 22: Abstand
- 23: Stopfen
- 24: Zentrum
- 25: Rand
- 26: Achse
- 2 7: Radius
- 28: Ionisierungselektrode
- 29: Masseelektrode
- 30: elektrischer Leiter
- 31: Strömungsrichtung
- 32: Sauerstoff-Quelle
- 33: Pore
- 34: Ablenkung

## Patentansprüche

1. Vorrichtung (1) zur Behandlung von Rußpartikel (2) enthaltendem Abgas mobiler Verbrennungskraftmaschinen, umfassend zumindest
- mindestens eine Stickstoffdioxid-Quelle (3) oder eine Sauerstoff-Quelle (32),
- mindestens ein Ionisierungselement (4) zur Ionisierung von Rußpartikeln (2),
- mindestens ein Neutralisierungselement (5) zur Neutralisation von elektrisch geladenen Rußpartikeln (2),
- mindestens ein als Wabenkörper (11) ausgebildeter Oberflächenabscheider (6), der eine Mehrzahl von Kanälen (7) aufweist, die für das Abgas durchströmbar sind und sich zwischen einem Eintrittsbereich (8) und einem Austrittsbereich (9) erstrecken, wobei die Kanäle (7) Kanalwände (17) aufweisen, wobei zumindest teilweise an dem Eintrittsbereich (8) mindestens ein Ablagerungshindernis (10) für elektrisch geladene Rußpartikel (2) vorgesehen ist, **dadurch gekennzeichnet, dass** das Ablagerungshindernis (10) durch eine in Verlaufsrichtung der Kanäle (7) unterschiedliche elektrische Leitfähigkeit der Kanalwände (17) gebildet ist, so dass eine überwiegende Ablagerung der elektrisch geladenen Rußpartikel (2) im Eintrittsbereich (8) verhindert wird und eine möglichst gleichmäßig Ablagerung von Rußpartikeln (2) auf den Kanalwänden (17) stattfindet.

2. Vorrichtung (1) nach Patentanspruch 1, bei der das mindestens eine Neutralisierungselement (5) im Bereich des Austrittsbereichs (9) des mindestens einen Oberflächenabscheiders (6) ausgebildet ist.

3. Vorrichtung (1) nach einem der vorhergehenden Patentansprüche, bei der den Kanälen (7) verschiedene Ausgestaltungen des mindestens einen Ablagerungshindernisses (10) zuordenbar sind.

4. Vorrichtung (1) nach einem der vorhergehenden Patentansprüche, bei der das mindestens eine Ablagerungshindernis (10) sich in verschiedene axiale Zonen (12) der Kanäle (7) erstreckt.

5. Vorrichtung (1) nach einem der vorhergehenden Patentansprüche, bei der das mindestens eine Ablagerungshindernis (10) durch verschiedene Kanalformen (13) gebildet ist.

6. Vorrichtung (1) nach Patentanspruch 5, bei der zentral angeströmte Kanäle (7) zumindest größer oder strukturierter ausgeführt sind als dezentral angeströmte Kanäle (7).

7. Vorrichtung (1) nach einem der vorhergehenden Patentansprüche, bei der das mindestens eine Ablagerungshindernis (10) durch wenigstens einen elektrischen Isolator (15) gebildet ist.

8. Vorrichtung (1) nach einem der vorhergehenden Patentansprüche, bei der der mindestens eine Oberflächenabscheider (6) als Grundwerkstoff einen elektrischen Isolator (15) aufweist, der ein Ablagerungshindernis (10) bildet.

9. Vorrichtung (1) nach Patentanspruch 8, bei der der Oberflächenabscheider (6) mindestens ein Neutralisierungselement (5) ausweist, wobei das mindestens eine Neutralisationselement (5) in den Kanälen (7) verschieden ausgeführt ist.

10. Verfahren zum Betreiben einer Vorrichtung nach einem der vorhergehenden Patentansprüche zur Umsetzung von Rußpartikeln (2) eines Abgases umfassend zumindest die folgenden Schritte:
a) Bereitstellen von zumindest Stickstoffdioxid oder Sauerstoff im Abgas,
b) Ionisieren von Rußpartikeln (2) mittels eines elektrischen Feldes (16),
c) Ablagern von elektrisch geladenen Rußpartikeln (4) auf inneren Kanalwänden (17) mindestens eines Oberflächenabscheiders (6),
d) Inkontaktbringen von zumindest Stickstoffdioxid oder Sauerstoff mit den abgelagerten Rußpartikeln (2) auf inneren Kanalwänden (7) des mindestens eines Oberflächenabscheiders (6).

11. Verfahren nach Patentanspruch 10, wobei in Abhängigkeit zu einem Abgasparameter das Strömungsverhalten des Abgases durch die Kanäle (7) des mindestens einen Oberflächenabscheiders (6) oder die Ausgestaltung des elektrischen Feldes (16) variiert wird.

12. Verfahren nach Patentanspruch 10 oder 11, wobei eine kontinuierliche Regeneration des mindestens einen Oberflächenabscheiders (6) erfolgt.

13. Verfahren nach einem der Patentansprüche 10 bis 12, wobei eine gleichmäßige Ablagerung der elektrisch geladenen Rußpartikeln (4) auf allen Kanälen (7) des mindestens einen Oberflächenabscheiders (6) erfolgt.

## Claims

1. Device (1) for treating exhaust gas, containing soot particles (2), of mobile internal combustion engines, comprising at least
- at least one nitrogen dioxide source (3) or an oxygen source (32),
- at least one ionization element (4) for ionizing soot particles (2),
- at least one neutralization element (5) for neutralizing electrically charged soot particles (2),
- at least one surface precipitator (6), which is embodied as a honeycomb element (11) and has a multiplicity of ducts (7) through which the exhaust gas can flow and which extend between an inlet region (8) and an outlet region (9), wherein the ducts (7) have duct walls (17), wherein at least one deposition inhibitor (10) for electrically charged soot particles (2) is provided at least partially at the inlet region (8), **characterized in that** the deposition inhibitor (10) is formed by different electrical conductivity of the duct walls (17) in the direction of extent of the ducts (7), with the result that the electrically charged soot particles (2) are prevented from being mainly deposited in the inlet region (8), and the most uniform possible deposition of soot particles (2) on the duct walls (17) takes place.

2. Device (1) according to Patent Claim 1, in which the at least one neutralization element (5) is formed in the region of the outlet region (9) of the at least one surface precipitator (6).

3. Device (1) according to one of the preceding patent claims, in which various refinements of the at least one deposition inhibitor (10) can be assigned to the ducts (7).

4. Device (1) according to one of the preceding patent claims, in which the at least one deposition inhibitor (10) extends in various axial zones (12) of the ducts (7).

5. Device (1) according to one of the preceding patent claims, in which the at least one deposition inhibitor (10) is formed by various duct shapes (13).

6. Device (1) according to Patent Claim 5, in which ducts (7) in which there is a central flow are made at least larger or more patterned than ducts (7) in which there is an off-center flow.

7. Device (1) according to one of the preceding patent claims, in which the at least one deposition inhibitor (10) is formed by at least one electrical insulator (15).

8. Device (1) according to one of the preceding patent claims, in which the at least one surface precipitator (6) has, as a basic material, an electrical insulator (15) which forms a deposition inhibitor (10).

9. Device (1) according to Patent Claim 8, in which the surface precipitator (6) has at least one neutralization element (5), wherein the at least one neutralization element (5) is embodied differently in the ducts (7).

10. Method for operating a device according to one of the preceding patent claims for converting soot particles (2) of an exhaust gas, comprising at least the following steps:
a) provision of at least nitrogen dioxide or oxygen in the exhaust gas,
b) ionization of soot particles (2) by means of an electrical field (16),
c) depositing of electrically charged soot particles (4) on inner duct walls (7) of at least one surface precipitator (6), and
d) placing of at least nitrogen dioxide or oxygen in contact with the deposited soot particles (2) on inner duct walls (7) of the at least one surface precipitator (6).

11. Method according to Patent Claim 10, wherein the flow behavior of the exhaust gas through the ducts (7) of the at least one surface precipitator (6) or the configuration of the electrical field (16) is varied as a function of an exhaust gas parameter.

12. Method according to Patent Claim 10 or 11, wherein continuous regeneration of the at least one surface precipitator (6) takes place.

13. Method according to one of Patent Claims 10 to 12, wherein the electrically charged soot particles (4) are deposited uniformly on all the ducts (7) of the at least one surface precipitator (6).

## Revendications

1. Dispositif (1) de traitement de gaz d'échappement, contenant des particules (2) de suie, de moteurs à combustion interne mobiles, comprenant au moins :
- au moins une source (3) de dioxyde d'azote ou une source (32) d'oxygène,
- au moins un élément (4) d'ionisation, pour l'ionisation de particules (4) de suie,
- au moins un élément (5) de neutralisation, pour la neutralisation de particules (2) de suie chargées électriquement,
- au moins un séparateur (6) en surface, sous la forme de nid d'abeille et ayant une pluralité de canaux (7), dans lesquels le gaz d'échappement peut passer et qui s'étendent entre une partie (8) d'entrée et une partie (9) de sortie, les canaux (7) ayant des parois (17), dans lequel au moins partiellement sur la partie (8) d'entrée est prévu au moins un obstacle (10) au dépôt de particules (2) de suie chargées électriquement, **caractérisé en ce que** l'obstacle (10) au dépôt est formé par une conductivité électrique des parois (17) de canaux différente dans la direction du tracé des canaux (7), de manière à empêcher un dépôt prépondérant des particules (2) de suie chargées électriquement dans la partie (8) d'entrée et à produire un dépôt aussi uniforme que possible de particules (2) de suie sur les parois (17) des canaux.

2. Dispositif (1) suivant la revendication 1, dans lequel le au moins un élément (5) de neutralisation est constitué dans la zone de la partie (9) d'entrée du au moins un séparateur (6) en surface.

3. Dispositif (1) suivant l'une des revendications précédentes, dans lequel des conformations différentes du au moins un obstacle (10) au dépôt peuvent être associées aux canaux (7).

4. Dispositif (1) suivant l'une des revendications précédentes, dans lequel le au moins un obstacle (10) au dépôt s'étend dans des zones (12) axiales différentes des canaux (7).

5. Dispositif (1) suivant l'une des revendications précédentes, dans lequel le au moins un obstacle (10) au dépôt est formé par des formes (13) différentes de canal.

6. Dispositif (1) suivant la revendication 5, dans lequel des canaux (7) au centre sont réalisés au moins plus grands ou plus structurés que des canaux (7) qui ne sont pas au centre.

7. Dispositif (1) suivant au moins l'une des revendications précédentes, dans lequel le au moins un obstacle (10) au dépôt est formé par au moins un isolant (15) électrique.

8. Dispositif (1) suivant l'une des revendications précédentes, dans lequel au moins un séparateur (6) en surface a comme matériau de base un isolant (15) électrique qui forme un obstacle (10) au dépôt.

9. Dispositif (1) suivant la revendication 8, dans lequel le séparateur (6) en surface a au moins un élément (5) de neutralisation, le au moins un élément (5) de neutralisation étant réalisé différemment dans les canaux (7).

10. Procédé pour faire fonctionner un dispositif suivant l'une des revendications précédentes pour la transformation de particules (2) de suie d'un gaz d'échappement, comprenant au moins les stades suivantes :
a) mise à disposition d'au moins du dioxyde d'azote ou d'oxygène dans le gaz d'échappement,
b) ionisation de particules (2) de suie au moyen d'un champ (16) électrique,
c) dépôt de particules (4) de suie chargées électriquement sur les parois (17) intérieures de canaux d'au moins un séparateur (6) en surface,
d) mise en contact d'au moins du dioxyde d'azote ou de l'oxygène avec des particules (2) de suie déposées sur des parois (7) intérieures de canaux du au moins un séparateur (6) en surface.

11. Procédé suivant la revendication 10, dans lequel on fait varier le comportement à l'écoulement du gaz d'échappement dans les canaux (7) du au moins un séparateur (6) en surface ou la conformation du champ (16) électrique en fonction d'un paramètre du gaz d'échappement.

12. Procédé suivant la revendication 10 ou 11, dans lequel on effectue une régénération continue du au moins un séparateur (6) en surface.

13. Procédé suivant l'une des revendications 10 à 12, dans lequel on effectue un dépôt uniforme des particules (4) de suie chargées électriquement sur tous les canaux (7) du au moins un séparateur (6) en surface.
